# EUROPÄISCHE PATENTANMELDUNG

(11) **EP 0 949 592 A2**
(43) Veröffentlichungstag der Anmeldung: **13.10.1999**
(21) Anmeldenummer: 98121933.0
(22) Anmeldetag: 19.11.1998
(51) Int. Cl.: G07C 3/00, G01D 21/00, G01D 5/00

(54) **System zur Messung oder Identifikation von Schwingungen oder Geräuschen**

(30) Priorität: 21.11.1997 DE 29720688 U
(71) Anmelder: Prüftechnik Dieter Busch AG, 85737 Ismaning (DE)
(72) Erfinder: Busch, Dieter, D-85737 Ismaning (DE); Hermann, Michael, D-78050 Villingen-Schwenningen (DE)

(57) **Zusammenfassung**

Das Mess- und Identifikationssystem ist insbesondere für die Messung von mechanischen Schwingungen oder Geräuschen geeignet. Es wird vollständig berührungs- und drahtloslos mit einem zugehörigen Abfragegerät in Verbindung gebracht. - Identifikations-Codes werden bevorzugt nach einem Zufallsprinzip generiert und einer Signalquelle fest zugeordnet. Nach Massgabe einer von mehreren Triggerbedingungen werden Signale bereitgestellt, welche Messdaten und Kennungs-Daten repräsentieren. Diese Signale werden mittels eines oder mehrerer bereitgestellter Sendeeinrichtungen an das zugehörige Abfragegerät übermittelt. Das Mess- und Identifikationssystem arbeitet autark, d.h. eine drahtgebundene Stromversogung ist entbehrlich. Damit ist eine Messwerterfassung über lange Zeiträume und auch an abgelegenen Messtellen möglich.

## Beschreibung

Die Erfindung betrifft ein Schwingungs- oder Geräuschmessungs-und Identifikationssystem nach dem Oberbegriff des Anspruchs 1.

Ein solches ist bekannt aus der WO 95/00930. Mit diesem ist es möglich, den Zustand einer oder mehrerer Maschinen an mehreren Messtellen jeweils mittels eines dort lösbar anzusetzenden Messkopfes mit Messwandler festzustellen. Ein diesbezügliches Messsignal wird zusammen mit an der jeweiligen Messstelle gewonnenen, für diese charakteristische Kenndaten, an einen zugehörigen Rechner, insbesondere in Form eines Datensammlers, geliefert.

Das vorgenannte System stellt einen erheblichen Fortschritt hinsichtlich verbesserter Absicherung gegen fehlerhafte oder irrtümliche Identifikation von Messstellen dar, da wahrend routinemässiger Inspektionsgänge keine manuellen Eingaben bezüglich jeweils zugehöriger Kennungsdaten mehr erfolgen müssen. Insofern kommt dieses System den Anforderungen entgegen, wie sie z.B. durch die internationale Normen ISO 9000 ff. vorgegeben werden.

Die Zuverlässigkeit und Verfügbarkeit des aus der o.g. WO-Veröffentlichung bekannten Systems und Verfahrens hängt daher im wesentlichen nur noch von der Zuverlässigkeit der dort vorgesehenen Kontaktelemente ab, an die jedoch gemäss jener Erfindung zum Teil ohnehin nicht allzuhohe Anforderungen gestellt werden müssen, und welche im Bereich metallischer Kontaktstellen durch Vergoldungen oder ähnliche Massnahmen relativ kontaktischer bereitgestellt werden können.

Andererseits ist es mit Arbeitsaufwand verbunden, die jeweiligen Mess- und Identifikationssysteme jeweils manuell mit einem Abfragegerät in Verbindung zu bringen. In jedem Fall ist eine subjektive Vergewisserung erforderlich, ob eine aktuell vorgesehene Verbindung von Abfragegerät und Identifikationssystem in gewünschter Weise zustande gekommen ist. Bei falscher, d.h. nachlässiger oder versehentlicher Handhabung wie verkantetes oder unvollständiges Ansetzen, kann naturgemäss keine ordnungsgemässe Verbindung zwischen diesen Gerätekomponenten eintreten.

Unter speziellen industriellen Betriebsbedingungen, z.B. bei Gegenwart saurer Dämpfe oder Gase, insbesondere gasförmiger Essigsäure, oder bei der Herstellung von Substanzen oder Materialien auf Basis von Silikonöl oder Silikonkautschuk, wird die Verfügbarkeit mechanischer Kontakte bekanntlich erheblich gemindert.

Es ist daher eine Aufgabe der Erfindung, ein Mess- und Identikationssystem bereitzustellen, insbesondere ein solches für die Messung von mechsnischen Schwingungen oder Geräuschen, welches die vorgenannten Nachteile und Restriktionen vermeidet und somit eine zuverlässigere und/oder wirtschaftlichere Betriebsweise eines solchen Systems ermöglicht.

Diese Aufgabe wird mit den Mitteln der untengenannten unabhängigen Ansprüche gelöst.

Gemäss der vorliegenden Erfindung ist es von erheblichem Vorteil, auf eine kontaktgebende Anbindung von Mess- und Identifikationssystem und zugehörigem Abfragegerät zu verzichten und die Anbindung der genannten Systemkomponenten stattdessen vollständig berührungslos und gemäss den erfindungsgemässen Mitteln vorzunehmen. Auf diese Weise wird erhebliche Arbeitszeit eingespart, oder es kann alternativ auf das Verlegen einer permanent installierter Fernmelde-Verkabelung vernichtet werden. Darüberhinaus kann die Zuverlässigkeit und Verfügbarkeit des hier zu betrachtenden Systems in erheblichem und vorteilhaftem Maasse weiter gesteigert werden.

Gemäss der vorliegenden Erfindung können daher sowohl Messdaten, insbesondere solche, die mit einem Beschleunigungssensor zum Zwecke einer Schwingungs- oder Geräuschmessung erfassbar sind, als auch Identifikationsdaten, welche eine einzelne Mess-Stelle oder einen einzelnen Mess-Sensor individuell identifizieren, vollständig drahtlos, d.h. ohne Anschaltung von Versorgungsspannungs- oder Abfrageleitungen, an eine übergeordnete Erfassungseinheit, zum Beispiel einen Rechner, einen Datensammler oder eine vergleichbare, bevorzugt elektronisch arbeitende Maschine, weitergeleitet und übertragen werden.

Gemäss der Erfindung wird hierzu eine Sendeeinheit vorgesehen, welche die genannten Mess- und Identifikationsdaten entweder miteinander vermischt und im wesentlichen zeitgleich, oder in zeitlich sukzessiver Reihenfolge überträgt, und sich dabei entweder einer bevorzugt einzigen, oder aber gegebenenfalls zweier drahtloser Signalübertragungsarten bedient. Im letzteren Fall besteht die genannte Sendereinheit somit aus einem Sender-Teil A und einem Sender-Teil B.

Die zu Identifizierungszwecken zu übertragenden (zu sendenden) Identifikationsdaten sind gemäss der Erfindung elektronisch abgespeichert. Sie können fest, jedoch gegebenenfalls ein- oder mehrfach willkürlich veränderbar sein, um die Identifikationsdaten einem vorgegebenen Organisationsschema anzupassen. Sie können aber auch gemäss der Erfindung fest und absolut unveränderlich eingespeichert sein, da die Indentifikationsdaten einer zufälligen Codierung entsprechen und mit z.B. einem 16 bis 128-bit-code, bevorzugt mit einem 64-bit-Code, repräsentiert werden, welcher innerhalb einer einzigen Industrieanlage auch bei ca. 10000 Sensoren praktisch nie mehrfach vorkommt.- Die Identifikationsdaten können nach Massgabe einer Trigger-Bedingung auf eine nachgeschaltete Sendeeinheit geleitet werden.

Die von einem Sensor, allgemeiner einem Signalerzeuger (Signalgenerator) stammenden Mess-Signale, seien es Vibrations-Signale oder anderen mechanischen Grössen zugeordnete Messwerte oder Signale, wie z.B. Temperatur-Signale, oder andere, in elelctrische Signale gewandelte physikalische Messgrössen, können gemäss der Erfindung entweder direkt zu einer nachgeschalteten Sendeeinheit geleitet werden, oder werden nach Massgabe einer Trigger-Bedingung aufbereitet, oder in einer zeitlichen Sequenz erfasst und zwischengespeichert.

Die genannten Trigger-Bedingungen können gemäss der Erfindung in einer Trigger-Stufe nach Massgabe mindestens eines Trigger-Signales generiert werden. Solche Trigger-Signale sind erfindungsgemäss insbesondere solche, welche von entweder
- einem triggernden Zusatz-Sensor (Trigger-Sensor)
- einer Echtzeituhr (Real Time Clock, RTC)
- einem Sensor oder allgemein Signalgenerator, wie oben genannt,
- einer Stromversorgungsstufe, speziell einer Akkumulator- oder Kondensator-Einheit
- oder einer Generator-Einheit, welche die Stromversorgungs-Stufe speist ,
erzeugt werden.

Von dem erfindungsgemässen Mess- und Identifikationssystem werden zu übertragende Nutzdaten, bestehend aus zu übertragenden Messdaten und zu übertrgenden Identifikationsdaten daher bevorzugt diskontinuierlich, das heisst nach Massgabe einer Trigger-Bedingung, gesendet. Sie werden dann, im Verlauf des Sendevorganges, von einem zugeordneten Empfänger für solche Nutzdaten, welcher zumindest einige Zentimeter, bevorzugt auch im Meter-Bereich von dem Mess- und Identifikationssystem beabstandet sein kann, drahtlos empfangen und an eine nachgeschaltete übergeordnete Erfassungseinheit zwecks weiterer Datenauswertung weitergeleitet.

Zur Energieversorgung der vorliegenden Erfindung ist eine zusätzliche und bevorzugt extern befindliche, speziell mobile Energieübertragungseinheit, im folgenden Energizer genannt, vorgesehen, welche bei Annäherung an das Mess- und Identifikationssystem optische oder andere elektromagnetische Energie an dieses liefert. Der Energizer bewirkt daher, in Zusammenspiel mit einem dem genannten System zugehörigen Wandler, eine Einspeisung von elektrischer Energie in das genannte System. Der Energizer kann aber auch in Nähe des Mess- und Identifikationssystems fest angeordnet und mit diesem elektrisch verbunden sein, und verfügbare mechanische oder optisch/elektrornagnetische Energie in elektrische Energie konvertieren.

Eine in einer Stromversorgungsstufe des Mess- und Identifikationssystems befindliche Akkumulator- oder Kondensator-Einheit dient zur Zwischenspeicherung elektrischer Energie, mit welcher alle elektrisch betriebenen Sub-Systeme der Erfindung versorgt werden, mit partieller Ausnahme einer eventuell vorhandenen Echtzeituhr.

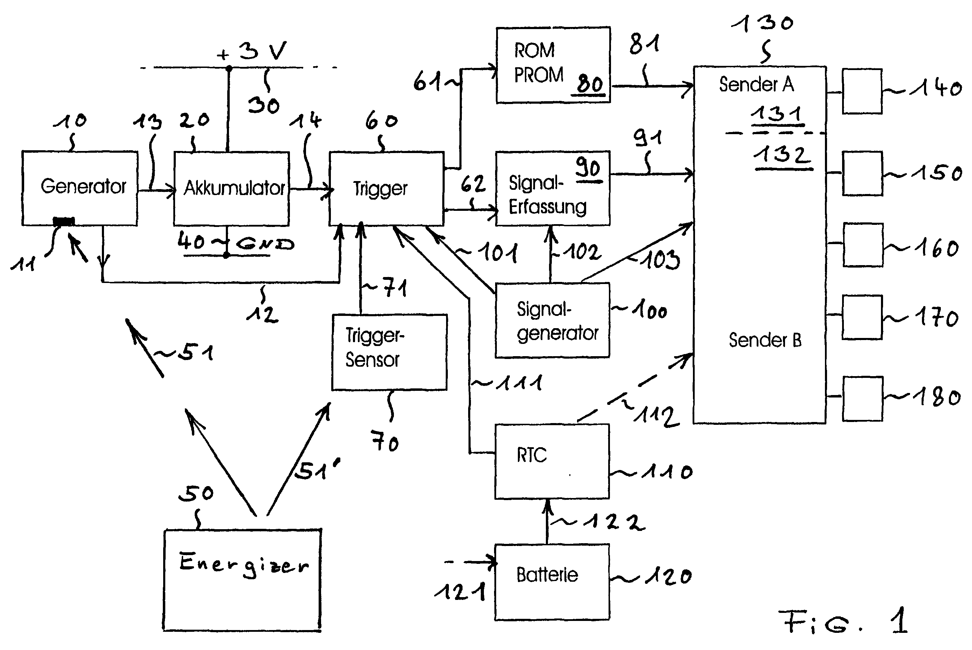

Diese und weitere Aspekte der Erfindung werden im folgenden anhand eines vollständigen Beispiels gemäss der Zeichnung, Fig. 1, beschrieben, welche ein Blockschaltbild der Erfindung zeigt.

Die Bereitstellung der elektrischen Versorgungs-Energie durch einen Generator 10 erfolgt für eine vorgesehene Beabstandung von mehreren Dezimetern zwischen Mess-/Identifikationssystem und einem drahtlos angekoppelten Abfragegerät (nicht gezeigt) bevorzugt dadurch, dass der Generator 10 als Solar-Zelle ausgebildet ist, welche eine optische Leistung von etwa 10 W/cm2 entgegennimmt, so dass eine elektrische Leistung von ca. 0,1 bis 2 Watt erzeugt werden kann. Die optische Leistung kann gemäss der Erfindung mit konstantem Pegel bereitgestellt werden, zum Beispiel durch eine Beleuchtungseinrichtung (Energizer, Bezugsziffer 50) ähnlich einer herkömmlichen Taschenlampe. Der Pegel kann aber insbesondere auch zeitlich moduliert sein. Zu diesem Zweck ist eine Beleuchtung mit einer gepulst betriebenen, kleinvolumigen Entladungslampe mit einem Anschlusswert von ca. 10 bis 40 Watt vorgesehen.

Ist eine entsprechende Beabstandung von wenigen Millimetern oder Zentimetern möglich, so wird die elektrische Versorgungs-Energie bevorzugt dadurch erzeugt, dass der Generator 10 als Sekundärwicklung eines elektrischen Transformators mit vergleichsweise grossem Luftspalt ausgebildet ist, und die Primärwicklung dieses Transformators sich im Energizer 50 befindet.

Ein fest in der Nähe des Mess-/Identifikationssystems installierter Generator 10 kann seine Energie aus der Umgebung beziehen, so dass ein separater Energizer (Bezugsziffer 50) entfallen kann.

Bei genügend heller Beleuchtungsstärke für einen fest installierten Generator genügt es, eine bereits beschriebene Solarzelle, oder im Generatorbetireb geschaltete Photodiode oder vergleichbare optoelektronische Elemente vorzusehen, welche ständig und zumindest hilfsweise elektrische Energie produziert.

Bei Maschinen, welche mit einer Temperaturdiiferenz des Gehäuses gegenüber der Umgebungsluft von ca. 20 K und mehr betrieben werden, kann ein fest installierte Generator 10 zumindest anteilig auch in Form einer als (Thermospannungs-)Generator geschalteten Peltier-Batterie bereitgestellt werden. - Hierzu wird eine Fläche der Peltier-Batterie mit der Oberfläche einer entsprechenden Maschine in Kontakt gebracht, und die andere Fläche der Peltier-Batterie mittels eines profilierten Kühlkörpers der kühlenden Umgebungsluft ausgesetzt.

Bei Maschinen, welche sich durch merkliche Vibration eines Gehäuseteils auszeichnen, kann ein fest installierter Generator 10 zumindest anteilig auch in Form eines piezoelektrisch oder elektromechanisch wirkenden Generators oder Dynamos bereitgestellt werden, bei dem eine seismische, also schwere Masse eine Relativbewegung gegenüber dem vibrierenden Gehäuseteil ausführt und mittels zusätzlicher Permanentmagnete und Spulen oder Piezoelektrischer Wandler ein Wechselspannungssignal erzeugt.

Die durch den Generator 10 bereitgestellte Spannung wird auf eine Stromversorgungsschaltung 20 geschaltet, welche eine Elektronik aufweist, um entweder einen zugehörigen Akkumulator, z.B. Nickel-Hydrid-Akkumulator, oder einen Kondensator mit grosser Kapazität geeignet aufzuladen, so dass dieser zumindest für eine gewisse Zeitspanne eine Versorgungsspannung, z.B. 3 Volt, an eine Versorgungsspannungsleitung 30 legen, kann gegen eine Masseleitung (Ground, GND) 40.

Bei genügend grosser Spannung am Akkumulator oder Kondensator der Stromversorgangsschaltung 20 wird ein Triggersignal an die Triggerstufe 60 gegeben, welche die restliche Elektronik des Systems entweder periodisch oder einmalig aktiviert. Die periodische Aktivierung ist dabei für eine längerfristige, aber intermittierende Signalerfassung vorgesehen. Die einmalige, gleichzeitig oder aber auch nach vordefinierter zeitlicher Staffelung getriggerte Aktivierung initiiert via Triggerleitung 61 bevorzugt das ROM/PROM 80, welches die Identifikationsdaten enthält, sowie den Sender 130, oder einzelne seiner beiden Stufen A oder B (Bezugsziffern 131, 132). Die letztgenannte Triggerung kann entweder indirekt über Triggerleitung 62 und die Signal-Erfassungs-Stufe 90 erfolgen, oder auch direkt (nicht gezeigt).

Ein ähnliches Triggersignal kann, insbesondere mittels kapazitiver Kopplung und als Wechselspannungssignal, vom Generator 10 via Triggerleitung 12 auf die Triggerstufe 60 gegeben weerden, insbesondere bei Erzeugung von elektrischer Energie aus Wechsellicht.-Wird die elektrische Versorgungs-Energie anders erzeugt, kann gemäss der Erfindung über einen bevorzugt opto-elektrisch oder elektrodynamisch wirkenden Trigger-Sensor 70 über eine Triggerleitung 71 ein Triggersignal auf die Triggerstufe 60 gegeben werden.

Ein weiteres Triggersignal kann gemäss der Erfindung via Leitung 111 von einer ständig in Betrieb befindlichen Echtzeituhr 110 (RTC) bereitgestellt werden, welche von einer separaten Batterie 120 gespeist wird und ggf. aus der Stromversorgungseinheit 30 via Versorgungsleitung 121 nachgeladen werden kann. - Die Echtzeituhr kann ihre Daten (Zeitsignal) in einer besonderen Ausführungsform direkt über die Datenleitung 112 auf den Sender 130 schalten.

Ein wiederum weiteres Triggersignal kann via Triggerleitung 101 vom Signalgenerator 100 abgegeben werden, zum Beispiel wenn ein besonders hoher oder ungewöhnlicher Signalwert erfasst wird.

Die Triggerstufe 60 kann auf einzelne Triggersignale reagieren, oder aufgrund kombinierter Trigger-Signale auf den Trigger-Leitungen 12, 71, 111, 101, wobei die Trigger-Signale dann vorgegebenen Randbedingungen entsprechen müssen.

Die Triggerstufe 60 gibt, wie bereits erwähnt, Triggersignale insbesondere an das ROM/PROM (speziell in Form eines EEPROMs) 80 ab. Bevorzugt wird das ROM/EPROM einmalig mit einem zufällig erzeugten 64-bit Muster programmiert. Es ist unwahrscheinlich, und es kann durch Überprüfung mit gegebenenfalls nachfolgender Selektion auch ausgeschlossen werden, dass zwei Mess- und Identifikationssysteme inerhalb einer einzigen industriellen Anlage die gleichen 64-bit-Daten ihres ROMs/PROMs aufweisen.

Die 64-bit-Daten des ROMs/PROMs 80 werden bevorzugt seriell über den Sender 130, insbesondere über dessen Senderstufe 131, und eine der Abstrahlungs- oder Emissionseinrichtungen 140 bis 170 drahtlos zu einem zugeordneten Empfangsgerät gesendet.

Desgleichen werden, (bevorzugt nicht den Daten des ROMS/PROMS überlagert, da dies technische Probleme aufwerfen würde) die Signale des Signalgenerators 100, oder die der Signalerfassunseinheit 90, entweder direkt oder mittels eines Trägersignals und bekannter Modulationsverfahren auf den Sender 130 gegeben. Für qualitativ hochwertige Übertragung der letztgenannten Daten kann ein separater Senderteil 132 vorgesehen sein. Es versteht sich, dass Sender 130 normalerweise an die Versorgungsspannungsleitung 30 angeschlossen ist.

Die Abstrahlung der Sendeenergie geschieht mittels einer der Abstrahlungs- oder Emissionseinrichtungen 140 bis 170 bevorzugt auf elektromagnetisch/optischem Wege.

Hierzu kann die Sendeantenne 140 als kapazitiv wirkende Koppeleinrichtung in Form einer flächigen Elektrode ausgestaltet sein, welche auch als Sendeantenne im UHF- oder Radiofrequenzbereich verwendet werden kann.

Sendeantenne 150 ist identisch mit der bereits genannten Sekundärspule des zur Generatorstufe 10 gehörenden Transformators, wirkt im Sendebetrieb somit als Primärspule dieses Transformators, jedoch in einem anderen Frequenzbereich.

Emissionseinrichtung 160 wird durch eine oder mehrere Leucht- oder Laserdioden realisiert.

Emissionseinrichtung 170 wird durch eine Sendeantenne realisiert, für einen Wellenlängenbereich weniger Zentimeter, bzw. für den 10 - 20 Gigahertz - Bereich

Emissionseinrichtung 180 wird durch einen Ultraschallsender bereitgestellt, insbesondere für Ultraschallfrequenzen im Bereich von mehr als 30 kHz, speziell 64(+ - 20) kHz.

## Patentansprüche

1. Vorrichtung und Verfahren zum Messen und Übertragen von Messsdaten, insbeondere von Schwingungen oder Geräuschen und zur Übertragung von Identifikationsdaten an einer oder mehreren Maschinen,
mit einer integrierten oder separat angeordneten stromerzeugenden Generatorstufe, mit einer Stromversorgongsstufe, welche einen Akkumulator oder einen Kondensator oder eine Batterie enthält,
mit einer optional vorgesehenen Triggerstufe, zur Auslösung eines Datenerfassungs- oder -Sendevorganges
mit einem optional vorgesehenen Triggersensor, zur Auslösung eines Datenerfassungs- oder Sendevorganges
mit einem Identifikations-Speicher, insbesondere in Form eines ROMs, eines PROMs, eines EEPROMS, zur Beaufschlagung mit Identifikations-Daten, welche einer zumindest annähernd eindeutigen individuellen Identifikation einer einzelnen Vorrichtung dienen,
mit einem Signalgenerator, insbesondere in Form eines Beschleunigungssensors, zur Wandlung einer physikalischen Messgrösse in ein elektrisches Signal,
mit einer optional vorgesehenen Signal-Erfassungs-Einheit, zur Aufbereitung oder Zwischenspeicherung von Signalen, welche von dem Signalgenerator geliefert werden,
mit einer optional vorgesehenen Echtzeituhr,
mit einer Sendeeinheit, welche zumindest Signale von dem Identifikätions-Speicher und Signale, die ein eindeutiges Abbild der durch den Signalgenerator erzeugten Signale darstellen, drahtlos an ein zugehöriges Empfangsgerät senden kann, und wobei die Sendeeinheit optional Signale drahtlos versenden kann, welche in der Signal-Erfassungs-Einheit, oder der Echtzeituhr, erzeugt worden sind.

2. Vorrichtung und/oder Verfahren nach Anspruch 1, dadurch gekennzeichnet, dass die Sendeeinheit in Wirkverbindung mit mindestens einer der Antennen-Vorrichtungen 140, 150, 160, 170, 180 steht, wobei diese Antennen-Vorrichtungen geeignet sind, zumindest eine der folgenden Energieformen abzustrahlen:
- optische Energie
- elektromagnetische Energie
- akustische Energie

3. Vorrichtung und/oder Verfahren nach einem der Ansprüche 1 oder 2, dadurch gekennzeichnet, dass die Generatorstufe (10) einen thermoelektrisch oder einen optoelektrisch oder einen elektrodynamisch oder einen piezoelektrisch wirkenden Wandler aufweist, oder an einen von solchen angeschlossen ist, oder eine Sekundärspule eines Transformators mit vergleichsweise grossen Luftspalten enthält.
